# EUROPEAN PATENT SPECIFICATION

(11) **EP 4 646 574 B1**
(45) Date of publication and mention of the grant of the patent: **16.09.2026**
(21) Application number: 23800483.2
(22) Date of filing: 08.11.2023
(51) Int. Cl.: G01B 7/06

(54) **METHOD AND SENSOR ASSEMBLY FOR MEASURING THE THICKNESS OF AT LEAST ONE COATING LAYER**
VERFAHREN UND SENSORANORDNUNG ZUR MESSUNG DER DICKE MINDESTENS EINER DECKSCHICHT
PROCÉDÉ ET DISPOSITIF DE DÉTECTION POUR MESURER L'ÉPAISSEUR D'AU MOINS UNE COUCHE DE REVÊTEMENT

(30) Priority: 04.01.2023 EP 23150339
(43) Date of publication of application: 12.11.2025
(73) Proprietor: Tata Steel IJmuiden B.V., 1951 JZ Velsen-Noord (NL)
(72) Inventor: VAN DEN BERG, Frenk, 1970 CA Ijmuiden (NL); SANTILLANA DE VEERMAN, Maria, Begoña, 1970 CA Ijmuiden (NL); YANG, Haibing, 1970 CA Ijmuiden (NL)
(74) Representative: Group Intellectual Property Services
(86) International application number: PCT/EP2023/081170
(87) International publication number: WO 2024/146708

(56) References cited:
- CHENG WEIYING ET AL: "Determination of Layers' Thicknesses by Spectral Analysis of Swept-Frequency Measurement Signals", IEEE SENSORS JOURNAL, IEEE, USA, vol. 20, no. 15, 23 March 2020 (2020-03-23), pages 8643 - 8655, XP011797237, ISSN: 1530-437X, [retrieved on 20200702], DOI: 10.1109/JSEN.2020.2982944
- TAI CHENG-CHI: "Characterization of coatings on magnetic metal using the swept-frequency eddy current method", REVIEW OF SCIENTIFIC INSTRUMENTS, AMERICAN INSTITUTE OF PHYSICS, 2 HUNTINGTON QUADRANGLE, MELVILLE, NY 11747, vol. 71, no. 8, 1 August 2000 (2000-08-01), pages 3161 - 3167, XP012038459, ISSN: 0034-6748, DOI: 10.1063/1.1304862

## Description

### FIELD OF THE INVENTION

The invention relates to a method and a sensor assembly for measuring the thickness of at least one coating layer formed on a substrate of a workpiece, wherein the substrate comprises optionally a first coating layer made of an electrically conductive and either diamagnetic or paramagnetic material, disposed on top of a second coating layer made of a ferromagnetic, ferrimagnetic or anti-ferromagnetic material.

### BACKGROUND TO THE INVENTION

In order to measure the thicknesses of electrically conductive coating layers on a substrate in a non-destructive way, eddy-current detectors have been developed. For example, patent document US2013/0132012-A1 discloses an eddy-current detector which is adapted to measure the thickness of a coating on a substrate, the eddy-current detector being adapted to measure impedance of the coated substrate, the impedance including an inductive reactance component and a resistance component. The eddy-current detector is configured by establishing an impedance plane plot using a computer, the impedance plane plot indicating a variation of the impedance of the coated substrate as a function of coating thickness and substrate electrical conductivity, and establishing a calibration curve that is substantially insensitive to substrate electrical conductivity. Patent document US 2014/324384A1 also discloses a method for measuring the thickness of a coating layer formed on a substrate, the coating and the substrate being constituted by first and second mutually distinct electrically conductive materials. The method includes positioning induction means relative to the coating layer and feeding an alternating electrical signal to the induction means in order to induce a magnetic field in the workpiece.

Other known methods for measuring thicknesses of coating layers make use of Hall sensors, as described for example in patent document EP028487-A1 as well as patent document US RE 35,703. Cheng-Chi Tai; Characterization of coatings on magnetic metal using the swept-frequency eddy current method. Rev. Sci. Instrum. 1 August 2000; 71 (8): 3161-3167 discloses to determine the thickness of a coating layer on a substrate by using swept frequency eddy current sensing wherein either the coating or the substrate may be ferromagnetic.

However, these known methods are only able to determine the thickness of a single coating layer on a substrate. There are, however, important applications in which two coating layers are arranged one on top of each other on a substrate. For example, the anti-wear coating on the copper substrate of a continuous caster mould for use in a steel casting plant generally consists of two layers: the upper layer is made of a ceramic or cermet coating, which is electrically conductive, and the interlayer between the upper layer and the copper substrate is made of a Ni-based alloy, which is ferromagnetic. The substrate is made of copper or copper-based alloy, which is conductive and diamagnetic. The upper coating layer may be thinner than the interlayer, wherein the total thickness of the coating layers may vary from about 100µm to several mm. After refurbishing of the mould, the thicknesses of the individual layers may have changed, and may not be constant at different positions across the substrate. In particular, after a fresh Ni-based coating layer has been applied during the repairing process of the mould, the Ni-based coating layer may be thicker than the recommended thickness. This, however, may affect the measurement accuracy of eddy-current-based mould level sensors, which are used to control the liquid steel meniscus level in the continuous casting mould during the casting operation. This may cause severe instability issues during the casting process. Therefore, it is important to measure the thickness especially of the Ni-based coating layer prior to the use of the mould.

However, the above-described known solutions based on magnetometers or eddy-current sensors are only able to measure the thickness of a single coating layer, namely the upper coating layer. These solutions cannot be used to measure individual layer thicknesses of an electrically conductive coating on top of a ferromagnetic coating.

Patent document CN101532816-A describes an eddy-current-based approach for the measurement of two conductive, non-ferromagnetic layers on top of a substrate, wherein the electrical conductivities of the two layers may be distinguished from one another. The method relies on an eddy-current detection device based on a giant magneto-resistive sensor and an intelligent algorithm comprising a neural network that needs to be trained in a time-consuming training process, which might not converge, leading to a limited measurement accuracy. The method is not suitable for measuring the thickness of ferromagnetic coatings.

Patent document CN103852000-A1 also relates to an eddy-current detecting apparatus, which consists of a drive coil and a Hall sensor, wherein the drive coil is driven by an alternating (AC) current and generates a magnetic field; the Hall sensor probe is positioned between the drive coil and the test object to sense the change of the magnetic field level. The changes of the field level at the two frequencies are linked to the two conductive coating layers thicknesses by a quadratic function, which is solved to determine the thicknesses of the two coating layers. The quadratic function used here is suitable for two electrically conductive (but non-ferromagnetic) coating layers, where the conductivities are not the same. However, for a conductive coating layer on top of a ferromagnetic coat layer, this prior art is not applicable anymore.

Thus, there is no solution available for non-destructively measuring the thicknesses of a ferromagnetic layer disposed between a substrate and an upper layer made of an electrically conductive material.

### DESCRIPTION OF THE INVENTION

It is thus an object of the present invention to provide a measuring method and a sensor assembly for measuring the thicknesses of two or more coating layers on a substrate, which measuring method and sensor assembly are easy to implement and perform, and which provide reliable thickness measurements.

It is a further object of the invention to provide a method and sensor assembly for measuring the thickness of a ferromagnetic coating on a metal substrate.

These objects are met or exceeded by a method for non-destructively measuring the thickness of at least one coating layer formed on a substrate of a workpiece according to claim 1 and a sensor assembly according to claim 11. Further advantageous features and embodiments are set out in the dependent claims.

According to the first aspect, the invention provides a method of measuring the thickness of at least one coating layer formed on a substrate of a workpiece, wherein the workpiece comprises optionally a first coating layer made of a material which is electrically conductive and either diamagnetic or paramagnetic, and which is disposed on top of a second coating layer, which is made of a ferromagnetic, ferrimagnetic or anti-ferromagnetic material, wherein the second coating layer is disposed between the first coating layer and the substrate, the method comprising the steps of:
(a) placing an inductance sensor head in close proximity to the workpiece;
(b) measuring the inductance at a plurality of frequencies within a frequency range to obtain an inductance spectrum, and measuring the inductance at a predetermined frequency which is in the lower third of the frequency range or below the lower limit of the frequency range;
(c) determining a characteristic frequency from the inductance spectrum, wherein the characteristic frequency is the frequency of the zero-crossing of the real part of the inductance, or the frequency at which the imaginary part of the inductance is at a minimum, or the frequency at which the phase angle of the inductance is -90°;
(d) calculating the thickness of the first coating layer from the characteristic frequency, wherein the thickness may also be zero;
(e) calculating the thickness of the second coating layer from the inductance at the predetermined frequency and the calculated thickness of the first coating layer.

The measurement method of the invention uses an inductance sensor head, for example an inductance coil sensor, to measure the individual layer thicknesses of a one-layer or two-layer coating on a substrate, wherein one layer is made of a ferromagnetic material. It has been found that by analyzing the inductance spectrum at multiple frequencies, the thicknesses of the coating layer or layers may be deduced in a simple and accurate way. The inventive idea may be extended to three or more coating layers.

The upper coating layer, also referred to as first coating layer, is not ferromagnetic, it may be diamagnetic or paramagnetic. The first coating layer is electrically conductive, at least to a low degree. For example, the first coating layer may have an electrical resistivity ρ of less than 1 Ω·m, preferably less than 1 x 10⁻³ Ω·m, more preferred less than 1 µΩ·m, at 20°C. A lower limit for the electrical resistivity may be 1.59 x 10⁻⁸ Ω·m (resistivity of silver). An example of a material for a first coating layer is tungsten carbide. The method may also be applied to workpieces having no first coating layer, or where the first coating layer is present at some positions and not present, e.g., removed by wear, at other positions. In these cases, the thickness of the first coating layer will be detected as zero. The method may also be applied to workpieces where the first coating layer is made of an insulator, in which case the thickness will also be detected as zero. The first coating layer, if present, is disposed on top of a second coating layer made of a ferromagnetic, ferrimagnetic or antiferromagnetic material, so that the second coating layer is disposed between the first coating layer (if present) and the substrate. The measuring method may be used if the second coating layer is disposed directly on the substrate, but also in the presence of further layers disposed between the second coating layer and the substrate. The second coating layer, also referred to as lower layer, is preferably ferromagnetic. In the following, the term "ferromagnetic" will be used so as to comprise also ferrimagnetic and anti-ferromagnetic. The second coating layer is preferably also electrically conductive, at least to a low degree. For example, the second coating layer may have an electrical resistivity ρ of less than 1 Ω·m, preferably less than 1 x 10⁻³ Ω·m, more preferred less than 1 µΩ·m, at 20°C. A lower limit for the electrical resistivity may be 1.59 x 10⁻⁸ Ω·m (resistivity of silver). The substrate may be made of any material, both electrically conductive and non-conductive, i.e., it may be an insulator. In advantageous applications of the inventive measuring method, the substrate is made of an electrically conductive material. The substrate is preferably not ferromagnetic. It may be diamagnetic or paramagnetic. The substrate may be made of a non-ferromagnetic metal or metal alloy.

The measuring method comprises placing an inductance sensor head in close proximity to the workpiece, preferably close to that side or face of the substrate on which the coating layers are formed. "In close proximity" may mean at a distance of less than about 1 mm, preferably less than about 200 µm. Preferably, the inductance sensor head is placed at a defined distance to the uppermost coating layer, i.e., the first coating layer (if present) or otherwise the second coating layer. The inductance sensor head may be placed directly on top of the uppermost layer. It may also be held at a defined distance from the uppermost coating layer, e.g. by a spacer, which may be made of an insulating material such as plastic, ceramic or rubber, wherein the defined distance may be less than 1 mm, e.g., 1 µm to 200 µm. The inductance sensor head may be adapted to measure the thicknesses of the coating layers at one position of the workpiece and may be moved across the workpiece to measure the thicknesses at further positions.

The workpiece may be any kind of tool, industrial equipment, vehicle part or jewelry. The measuring method may thus be applied in various industries and applications, where coating layers need to be measured on a substrate, preferably on a metal substrate, e.g., on turbine blades, in nuclear plants, in the ship industry, in the metals industry or in the jewelry industry. Preferably, the measuring method is used to measure the coating thicknesses on metal objects, in particular the coating thicknesses on a copper or copper-based alloy forming the substrate as part of a continuous caster mould for the continuous casting of steel.

The inductance sensor head may comprise a driving coil and at least one sensing coil, wherein the driving coil is driven with an AC current, so that it generates a magnetic field which alternates at a plurality of frequencies, in particular the frequencies of the alternating current used to drive the drive coil. The at least one sensing coil senses the change of the magnetic field caused by the presence of the workpiece in the magnetic field. Thereby, an inductance spectrum may be generated, which is sensitive to the thicknesses of the coating layers.

The inventors have discovered that a characteristic frequency, which may be determined from the inductance spectrum, is almost only sensitive to the first (upper) coating layer thickness. In particular, the characteristic frequency is relatively independent of the thickness of the second, ferromagnetic coating layer. The independence of the characteristic frequency on the thickness of the second coating layer may be further improved by downscaling the sensor coils of the inductance sensor head, until the dependence is sufficiently low.

On the other hand, the inductance at a single predetermined frequency which is in the lower third of the frequency range or below the lower limit of the frequency range is sensitive to both the first coating layer and the second coating layer thicknesses. This predetermined frequency is relatively low, e.g., between 10 Hz and 1000 Hz, preferably between 50 Hz and 600 Hz, more preferred between 100 Hz and 300 Hz. Therefore, the predetermined frequency is also referred to as "low frequency" in the following. A suitable low frequency may be determined depending on the electromagnetic properties of the ferromagnetic layer. In particular, the magnitude and real part of the inductance at the low frequency have a good sensitivity to the thickness of the second coating layer, but the effect of the first coating layer has to be corrected.

Thus, the thicknesses of the two coating layers are deduced in at least two steps: in a first step (d), the thickness of the first coating layer is determined from a characteristic frequency of the inductance spectrum. This first layer thickness is then applied to compensate for the effect of the upper layer on the inductance at the low frequency. After this compensation, in a second step (e) the inductance at the low frequency (also referred to as "low frequency signal") may be used to determine the thickness of the second coating layer. These two steps involving data analysis may be performed by a data processing unit.

Thus, the invention provides a measuring method which is able to measure the thicknesses of two coating layers on a substrate, preferably on a metal substrate. The thicknesses of the two coating layers can be measured simultaneously using the same sensor. The sensor head is simple to construct and may be built for a continuous scanning over a large coated surface. In an embodiment, a measurement model requiring only 4 to 6, preferably 5 parameters, may be used to deduce the thicknesses of the coating layers from the measured inductance values. Multiple reference samples having known coating thicknesses may be used in a calibration procedure to calibrate the measuring method and the sensor assembly prior to the measurement.

In detail, the inductance sensor head is used to measure the inductance at a plurality of frequencies within a frequency range to obtain an inductance spectrum, and to measure the inductance at the predetermined frequency. The inductance may be the mutual inductance of a driving coil and a sensing coil. The inductance is preferably measured as a complex value, i.e. having a magnitude and phase angle, and a real and imaginary part. The inductance may be measured by measuring the impedance. The inductance sensor head may work essentially like a metal detector. Therein, a driving coil is excited using an alternating current producing an oscillating magnetic field. When this magnetic field penetrates a workpiece close to the sensor head, it induces eddy-currents which create an opposing magnetic field. This secondary magnetic field causes an induction voltage in the sensing coil, which may be recorded as the induction signal or induction. In advantageous embodiments of the invention, there may be two sensing coils and the recorded inductance is the differential inductance of the two sensing coils.

The inductance spectrum may be measured by the following steps: Before starting the actual measurement, preferably a (complex) inductance spectrum L₀ may be measured at multiple frequencies, when no workpiece is present. This step may be performed only once for the sensor head or once for each series of measurement and the result may be stored e.g., in a computer or storage medium connected to a data processing unit carrying out the data analysis steps.

After the sensor head has been placed in close proximity the workpiece to be measured, the (complex) inductance spectrum L₁ at the same frequency points as L₀ may be measured. The change in the inductance spectrum Δ*L* caused be the workpiece may be calculated as Δ*L = L*₁ *- L*₀. This change in inductance Δ*L* or alternatively L₁ may be used as the (usually complex) inductance spectrum used in further processing.

In the next step (c), a characteristic frequency is deduced from the inductance spectrum. The characteristic frequency may be determined as the frequency of the zero-crossing of the real part of the inductance, i.e. the frequency point at which the real part inductance is zero, or the frequency at which the imaginary part of the inductance is at a minimum, or the frequency at which the phase angle of the inductance is -90°. In most embodiments, either of these three analysis methods will yield the same frequency, i.e. these are alternative ways to determine the characteristic frequency. Since the inductance spectrum may be measured only at a limited number of frequency points, the spectrum may be interpolated in order to determine the characteristic frequency. For example, one may perform an interpolation on the inductance phase spectrum to determine the characteristic frequency point at which the phase angle is -90°. In a similar way, also the real part of the inductance may be interpolated to find the frequency at which the real part is zero (zero-crossing). In alternative embodiments, suitable parametric functions may be fitted to the inductance spectrum to determine the characteristic frequency point.

The inventors have found that the characteristic frequency is highly independent of the properties and thicknesses of the second coating layer, and may be used to determine the first coating layer thickness. This may be done in the next step (d) by a simple calculation using a parametric model, the parameters of which may have been determined in a calibration procedure. The parametric model may be described by a parametric function, in particular a polynomial, exponential, logarithmic, power, root or trigonometric function or combinations thereof. The parametric model preferably may have 1 to 6, more preferred 2 to 3 parameters. If the first coating layer is not present or is made of an insulating material, the resulting thickness of the first coating layer is zero.

In the next step (e), the thickness of the second coating layer is calculated from the inductance at the predetermined frequency and the calculated thickness of the first coating layer. This step preferably also uses a parametric model, the parameters of which may be determined in a calibration procedure. The parametric model may be described by a parametric function, in particular a polynomial, exponential, logarithmic, power, root or trigonometric function or combinations thereof. The parametric model preferably may have 1 to 6, more preferred 2 to 4 parameters. This step (e) may be divided into several, in particular two, sub-steps. In the first sub-step, the inductance signal at the pre-determined, low frequency is processed to compensate for the effect of the first coating layer, using the previously calculated thickness of the first coating layer. In the second sub-step, the thickness of the second coating layer is determined from the compensated inductance at the low frequency obtained in the previous step.

Prior to the measurement method, a calibration procedure may be carried out using reference samples in order to obtain the parameters of the parametric functions/models used in the measurement method.

According to an embodiment, the thickness of the first coating layer is calculated from the characteristic frequency by a first parametric function, the parameters of the first parametric function having been determined in a calibration procedure, wherein the first parametric function is in particular ${t}_{1} = \frac{1}{{p}_{2}} \left(\frac{1}{{f}_{0}}-{p}_{1}\right)$ wherein t₁ is the thickness of the first coating layer, p₁ and p₂ are the parameters of the first parametric function, and f₀ is the characteristic frequency.

A "parametric function" may be any equation which defines a quantity (i.e., the coating thickness) as a function of one or several independent variables called parameters. The parametric function [1] given above has been fitted to numerically simulated data, but may also be obtained from measurement data. The invention is not limited to the equation [1], but other functions may be better fits e.g. for other coating materials.

In this embodiment, the thickness of the first coating layer is determined as a function of the characteristic frequency and - in this case - only two parameters, p₁ and p₂, which may be obtained from a calibration procedure, which will be explained in more detail below. The parametric model may be based on the results of a numerical simulation of the complex inductance, for example using a first coating layer of a ceramic or cermet coating, for example tungsten carbide, and a second coating layer of a Ni-based alloy, for example a NiCo-based alloy. The parametric models presented herein have been obtained by analyzing the results of a simulation using a numerical calculation based on an analytical eddy current modelling (Dodd-Deeds model) for multi-layer conductive structures. This simulation produced the result that the characteristic frequency has a hyperbolic dependency on the thickness of the first coating layer, as expressed by the equation: ${f}_{0} = \frac{1}{{p}_{1} + {p}_{2} ⋅ {t}_{1}}$

According to an embodiment, the thickness of the second coating layer is calculated from the magnitude or the real part of the inductance at the predetermined frequency by a second parametric function, the parameters of the second parametric function having been determined in a calibration procedure, wherein the second parametric function is in particular: ${t}_{2} = \frac{{p}_{5}}{ln \left|{L}_{low}\right| - ln \left({p}_{3}+{p}_{4}⋅{t}_{1}\right)}$ wherein t₂ is the thickness of the second coating layer, p₃, p₄ and p₅ are the parameters of the second parametric function, and L_{low} is the inductance measured at the predetermined frequency.

Thus, it has been found that the inductance at a relatively low frequency is determined by both the thicknesses of the first and second coating layers. With knowledge of the thickness of the first coating layer, one can thus determine the thickness of the second coating layer from a single parametric function. It has been found that it is mainly the magnitude or the real part of the inductance at the pre-determined frequency which is indicative of the second coating layer thickness. Thus, the equation [2] given above uses the magnitude of the inductance. An alternative way to determine the thickness of the second coating layer is to use the real part of the inductance at low frequency, instead of the inductance magnitude. A similar model and approach can be applied for the measurement.

According to an embodiment, the thickness of the second coating layer, t₂, is calculated by
(e1) (first sub-step) Compensating the effect of the first coating layer on the inductance at the pre-determined frequency (*f*_{low}) using the thickness of the first coating layer, as an input to a third parametric function, the parameters of the third parametric function having been determined in a calibration procedure,
(e2) (second sub-step) determining the thickness of the second coating layer rom the compensated inductance at the predetermined frequency using a fourth parametric function, the parameters of the fourth parametric function having been determined in a calibration procedure.

In the first sub-step, the effect of the first coating layer on the inductance may be compensated by inputting t₁ into the third parametric equation: $\left|{L}_{comp}\left({f}_{low}\right)\right| = {F}_{2} \left({t}_{1},L\left({f}_{low}\right),{p}_{3},{p}_{4}\right)$ where *p*₃ and *p*₄ are parameters obtained from the calibration procedure, and *L*_{comp} is the compensated inductance. In an example, equation 3 may be: $\left|{L}_{comp}\left({f}_{low}\right)\right| = \frac{\left|L\left({f}_{low}\right)\right|}{\left({p}_{3}+{p}_{4}⋅{t}_{1}\right)}$

In the second sub-step, the thickness of the first coating layer may be determined from the compensated inductance at the predetermined frequency using a fourth function, wherein *p*₅ is a parameter obtained from the calibration procedure: ${t}_{2} = {F}_{2} \left(\left|{L}_{comp}\left({f}_{low}\right)\right|, {p}_{5}\right)$

In an example, equation 4 may be: ${t}_{2} = \frac{{p}_{5}}{ln \left|{L}_{comp}\left({f}_{low}\right)\right|}$

Thus, the effect of the upper coating layer on the inductance at the predetermined frequency f_{low}, which may e.g. be 200 Hz, is compensated using equation 3. In a next step, the thickness of the second coating layer may be determined from the compensated inductance at the pre-determined frequency using equation 4. The operations of equations 3 and 4 may be performed in one step using equation 2.

According to an embodiment, the inductance is measured within a plurality of frequencies within a frequency range, wherein the lower limit of the frequency range is between 10 Hz and 1000 Hz, preferably between 100 Hz and 500 Hz, and the upper limit of the frequency range is between 5 kHz and 800 kHz, preferably between 10 kHz and 400 kHz, more preferred between 20 kHz and 100 kHz. The upper and lower limit of the frequency range may be adapted depending on the electromagnetic properties of the coating and the substrate, as well as on the expected thicknesses of the first and second coating layers. For example, for a first coating made of a cermet coating and having a thickness between about 0.1 mm and 0.6 mm, and a second coating layer made of a Ni-based alloy and having a thickness in a range of 0.3 mm to 1.3 mm, the frequency range may cover e.g. between about 300 Hz and 20 kHz, since the characteristic frequency may be in this range.

The predetermined frequency is preferably a low frequency, i.e., it is within the lower third of the frequency range or even below the lower limit of the frequency range, preferably in the lower fourth or fifth of the frequency range, or below the lower limit of the frequency range. The predetermined frequency may be one of the plurality of frequencies within the frequency range. Thus, this inductance measurement may be used for both determining the characteristic frequency and calculating the thickness of the second coating layer. The pre-determined frequency may be between 10 Hz and 1000 Hz, preferably between 50 Hz and 600 Hz, more preferred between 100 Hz and 300 Hz, e.g., at 200 Hz. The sensor diameter may be adapted such that the characteristic frequency is only sensitive to the upper layer (i.e. first coating layer), while the low frequency inductance is sensitive to both the first and second layers.

According to an embodiment, the inductance is measured at 4 to 32 frequencies, preferably at 6 to 16 frequencies, for example at 8 frequency points within the frequency range. Thus, only a limited number of measurement points is required to acquire an inductance spectrum. Alternatively, the inductance may also be acquired in a sweep across all frequencies in the frequency range. A frequency sweep may e.g., cover a frequency range from 1 Hz to 1 MHz within 10 seconds.

According to an embodiment, the method of the invention includes a calibration procedure including the steps of:
(i) placing the inductance sensor head in close proximity to a plurality of calibration samples, the calibration samples having a plurality of different, known thicknesses of the first and second coating layers;
(ii) for each calibration sample, measuring the inductance at a plurality of frequencies within a frequency range to obtain an inductance spectrum, and measuring the inductance at a pre-determined frequency which is in the lower third of the frequency range or below the lower limit of the frequency range;
(iii) determining the characteristic frequencies from the inductance spectra;
(iv) determining the parameters of the first parametric function from the characteristic frequencies of the plurality of calibration samples, using the know thicknesses of the first coating layer;
(v) determining the parameters of the second parametric function from the inductance at the pre-determined frequency of the plurality of calibration samples and the known thicknesses of the first and second coating layers.

A set of calibration samples may be required to calibrate the measuring method, in particular the data analysis steps (d) and (e) and/or a corresponding sensor assembly, in order to implement the measurement method. The calibration samples, in particular their coatings and substrate, preferably have the same electrical conductivity and magnetic permeability as the target workpiece, preferably the coatings are made of the same materials. At least 4 calibration samples may be required, wherein at least 2 samples have different first coating layer thicknesses, and at least 2 samples have different second coating layer thicknesses. From the characteristic frequencies of the calibration samples, the parameters of the first parametric function may be determined. For example, in equation 1, p₁ and p₂ may be determined by simply solving 2 equations with 2 unknowns, namely equation [1] with the different *f*₀ at the different thicknesses of the first layer. In an embodiment where 4 calibration samples are used, the average *f*₀ of all samples having the same first layer thickness may be used.

To find a parametric model for the second (or third and fourth) parametric functions, one may first calculate a normalized magnitude of the inductance |*L*_{comp}(*f*_{low})| at the predetermined frequency at the different thicknesses of the first coating layer. Thereby, the parameters required for calculating the thickness of the second coating layer may be determined, which is parameter p₅ in the herein described example equations. In a next step, one may determine the parameter p₃ and p₄ required to convert the magnitude of the inductance |*L*(*f*_{low})| into the magnitude of a compensated inductance |*L*_{comp}(*f*_{low})|. This may be done by fitting the referenced equations to the measurement data, using the known coating layer thicknesses.

The above parametric functions/functions have been found by numerical simulation methods using first and second coating layers made of a cermet coating, in particular tungsten carbide, and a nickel-based alloy, in particular a nickel cobalt alloy, respectively. Thus, for other materials, other parametric functions may be an even better model. However, it is expected that the functions 1 to 4 will provide a reasonably good model for many different materials, as long as the first coating layer is non-ferromagnetic and the second coating layer is ferromagnetic.

The calibration procedure may also include a step of measuring the inductance at a plurality of frequencies within the frequency range and at the predetermined frequency when the inductance sensor head is not influenced by any workpiece.

The measuring method of the invention may advantageously be applied to workpieces wherein the first coating layer has a thickness in a range of 0 µm to 3 mm, preferably 50 µm to 1.5 mm, more preferred 0.1 mm to 0.6 mm, and the second coating layer has a thickness in a range of 50 µm to 3 mm, preferably 0.1 mm to 1.5 mm, most preferred 0.3 mm to 1.3 mm. It has been found that the measuring method is particularly sensitive in this thickness range. However, by adapting the sensor diameter, other thickness ranges may also be covered. The sensor diameter may for example be between 5 mm and 50 mm, more preferred between 10 mm and 30 mm. It was 18 mm in the examples described herein.

According to an embodiment, the first coating layer may be made of a ceramic or a cermet coating. A cermet is a composite material composed of ceramic and metal materials, for example tungsten carbide or zirconium carbide. The second coating layer may be made of a nickel-based alloy, for example nickel cobalt. However, the first coating layer may be made of other electrically conductive, diamagnetic materials, and the second coating layer may also be made of other ferromagnetic materials. The substrate may be made of any material, e.g. of copper, and may have a thickness of e.g., 1mm to 20mm, though of course there is no upper limit on the thickness of the substrate, since the measuring method only requires access from one side of the workpiece. However, the inventive method is applicable to any materials, in particular metals, wherein the first coating layer is conductive and non-ferromagnetic, and the second coating layer is ferromagnetic, and preferably also electrically conductive.

According to an embodiment, the method of the invention may be used for measuring the thicknesses of the coating layers on a continuous casting mould for steel. In such embodiment, the substrate is usually made of copper or copper-based alloy, and the thicknesses of the anti-wear coating made of a cermet coating, e. g. tungsten carbide, and the adhesive layer made of a Ni-based alloy need to be determined after a refurbishing of the mould. This is useful since a too thick Ni-based alloy layer may affect the eddy current sensor for monitoring the meniscus lever of molten steel in the mould during the casting process.

According to a second aspect, the invention is directed to a sensor assembly for non-destructively measuring the thickness of a coating layer formed on a substrate of a workpiece, the substrate having optionally a first coating layer made of an electrically conductive and either diamagnetic or paramagnetic material, which is disposed on top of a second coating layer made of a ferromagnetic, ferrimagnetic or anti-ferromagnetic material, so that the second coating layer is disposed between the first coating layer and the substrate, the sensor assembly comprising:
- at least one sensor head comprising at least one coil, wherein the at least one coil is adapted to generate an alternating magnetic field at a plurality of frequencies within a frequency range, and to sense the change in magnetic field caused by the presence of the workpiece close to the sensor head;
- an impedance analyzer adapted to determine the inductance at the plurality of frequencies to obtain an inductance spectrum, and to determine the inductance at a predetermined frequency which is in the lower third of the frequency range or below the lower limit of the frequency range;
- a data processing unit adapted to determine a characteristic frequency from the inductance spectrum, wherein the characteristic frequency is the frequency of the zero-crossing of the real part of the inductance, or the frequency at which the imaginary part of the inductance is at a minimum, or the frequency at which the phase angle of the inductance is -90°; calculating the thickness of the first coating layer from the characteristic frequency, wherein the thickness may also be zero; and calculate the thickness of the second coating layer from the inductance at the pre-determined frequency and the calculated thickness of the first coating layer.

All embodiments and advantages described with respect to the measuring method may also be applied to the sensor assembly and vice versa. In particular, the sensor head may be as described in relation to the method. The data processing unit may be part of a computer, laptop, cloud computer, mobile device or any other processing device. It may be connected to a digital storage unit, e.g. a hard disc, memory stick or cloud database.

According to an embodiment, the sensor head comprises a driving coil adapted to generate an alternating magnetic field at a plurality of frequencies within a frequency range, and two sensing coils adapted to sense the change in magnetic field caused by the presence of the workpiece close to the sensor head; wherein the driving coil is interposed between the two sensing coils, and the magnetic field is measured as the differential output of the two sensing coils. In this embodiment, the driving coil may be arranged in between the two sensing coils, wherein all three coils may be arranged in parallel to the surface of the coated workpiece. The coils may be cylindrical coils having one or several turns.

The coils may be connected to an impedance analyzer adapted to measure the impedance. The mutual inductance between the coils can be calculated therefrom.

According to an embodiment, the sensor assembly comprises multiple sensor heads arranged in an array and adapted for simultaneously measuring the thickness or thicknesses of the coating layer(s) at multiple positions on the workpiece. Also the processing of the acquired signals may be performed in parallel by a data processing unit or computer. Thereby, it is possible for example to quickly examine a casting mould at multiple positions.

The sensor assembly, in particular if it includes multiple sensor heads, may be installed on an automatic robotic scanning system for scanning over a large surface area. Thereby, for example the coating thickness on a rolled steel product or rolled or extruded aluminium alloy product may be examined efficiently.

According to an embodiment, the sensor assembly comprises at least one displacement sensor for the measuring the surface profile of the workpiece during the process of measuring the thickness or thicknesses of the coating layer(s). The displacement sensors may be optical profilometer sensors. Thereby, the measurement data may be used to reveal comprehensive data on the quality of the workpiece and/or its coating, in particular information on any thickness reduction and structural integrity of the coating layer(s).

According to an embodiment, the sensor assembly comprises at least one temperature sensor to measure the temperature of the workpiece, wherein the data processing unit is adapted to compensate for the temperature effect on the sensor output. In this embodiment, further calibration samples at varying temperatures may be used in the calibration procedure and the parametric models are extended to include the effect of temperature on the material properties, which are reflected in changes in the inductance.

In an embodiment, the measurement data, in particular the measured first and second coating layer thicknesses, can be visualized in three dimensions (3D) in real time for a quick survey of the coating layer quality, in particular the variation in the coating layer thicknesses, or defects in the coating layer. These may be cracks in the coating layer or coating layer thickness reductions which may occur in the use of the workpiece.

In a further aspect of the invention it relates to the use of the non-destructive measuring method and the sensor assembly according to the invention as herein described and claimed for measuring the coating layer thicknesses present on copper or copper-based substrate forming a continuous casting mould for casting steel.

### DETAILED DESCRIPTION OF THE FIGURES

Non-limitative embodiments of the invention shall now be described with reference to the attached drawings, in which:
- Fig. 1: is a schematic side view of a sensor head according to an embodiment of the invention;
- Fig. 2.: is a schematic perspective view of a sensor head according to an embodiment of the invention;
- Fig. 3.: shows an example of 8 inductance values measured at different frequencies, represented in the complex plane;
- Fig. 4.: is a schematic cross-sectional view of a workpiece which may be studied using the sensor assembly of the invention;
- Fig. 5.: is a graph of the phase angle of the inductance phase spectra at various thicknesses of the first coating layer;
- Fig. 6.: is a representation of a parametric function describing the characteristic frequency versus the first coating layer thickness;
- Fig. 7: is a graph of the inductance magnitude at 200Hz for various first coating layer and second coating layer thicknesses;
- Fig. 8.: is a graph of the compensated inductance magnitude at 200Hz versus the second coating layer thickness.
Similar elements are designated with the same reference signs.

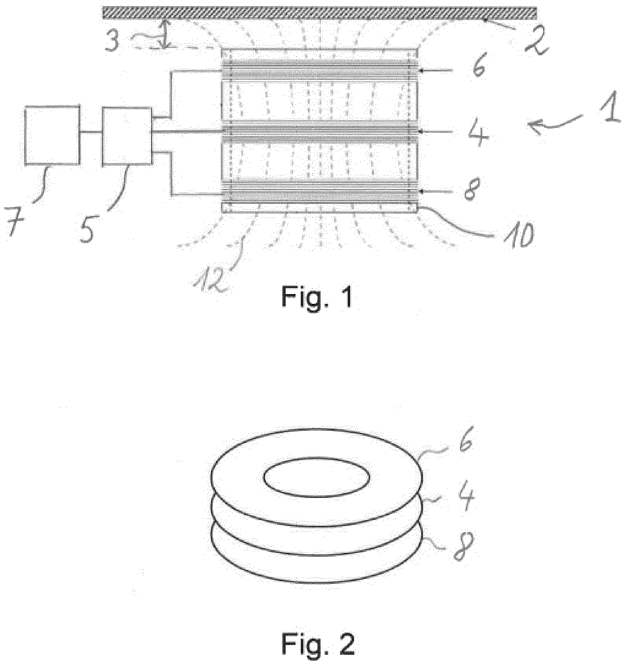

Fig.1 illustrates a sensor head 1 to be used in the method and sensor assembly according to an embodiment of the invention. The sensor head 1 is placed close to a workpiece 2 having coating layers to be measured. The sensor head 1 is arranged within a housing 10. The sensor head 1 or its housing 10 may be kept at a small distance 3 from the workpiece 2, e.g. by means of spacers (not shown). The sensor head 1 in this embodiment comprises three coils 4, 6, 8 which are arranged along the axis of a cylinder having an air core. Thus, the coils 4, 6, 8 may each have one or several turns, and may each be elliptical or circular. In this embodiment, the coils 4, 6, 8 are each substantially flat and arranged in parallel to the coated surface of the workpiece 2. However, the shape as well as the size of the coils may be adapted to the geometry of the workpiece 2 to be measured, and to the thickness and materials of the coating layers 16,18. In this embodiment, a driving coil 4 is disposed sandwiched between two sensing coils 6, 8. The driving coil 4 may be arranged in between the two sensing coils 6,8, wherein the coil 6 may be termed the active coil and the coil 8 may be termed the dummy coil. Thereby, it is possible to measure the differential signal between the two sensing coils 6,8, to thereby cancel out any environmental side effects. The driving coil 4 is excited from an alternating current (AC) generator at multiple frequencies, and the active and dummy coils 6, 8 deliver a complex inductance signal. The magnetic field generated by the AC current is illustrated at 12. The driving coil 4 as well as the sensing coils 6, 8 are connected to an impedance analyzer 5 for the measurement of mutual impedance Z. The mutual inductance L can be determined from the impedance by using Z = R + jΩL. The impedance analyzer 5 is further connected to a data processing unit 7 for data storage, processing and analysis of the acquired signal data.

Fig. 2 further illustrates the arrangement of cylindrical or circular coils 6, 4, 8 along the axis of a cylinder filled with air.

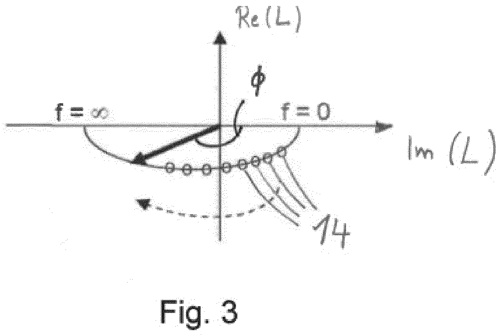

By driving the driving coil 4 at different frequencies, complex inductances L may be measured, which are illustrated on the complex plane in Fig. 3, with the axes indication the real part Re(L)= and the imaginary part lm(L) of the complex inductance. The circles 14 illustrate the respective complex inductances measured at different frequencies f between 0 and infinity. It may be seen that each inductance 14 has a different magnitude and phase angle φ.

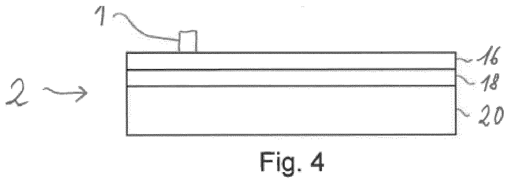

Fig. 4 illustrates a workpiece 2, on which a sensor head 1 may be placed to measure the coating layer thicknesses of a first coating layer 16 and a second coating layer 18, which are disposed on top of a substrate 20. Where the workpiece is a continuous casting mould in a steel casting plant, the anti-wear coating may comprise an upper or first coating layer 16 made of a cermet coating, in particular tungsten carbide. The interlayer or second coating layer 18 interposed between the cermet coating layer and the copper substrate 20 may be made of a Ni-based alloy, which is ferromagnetic, in particular a NiCo-based alloy.

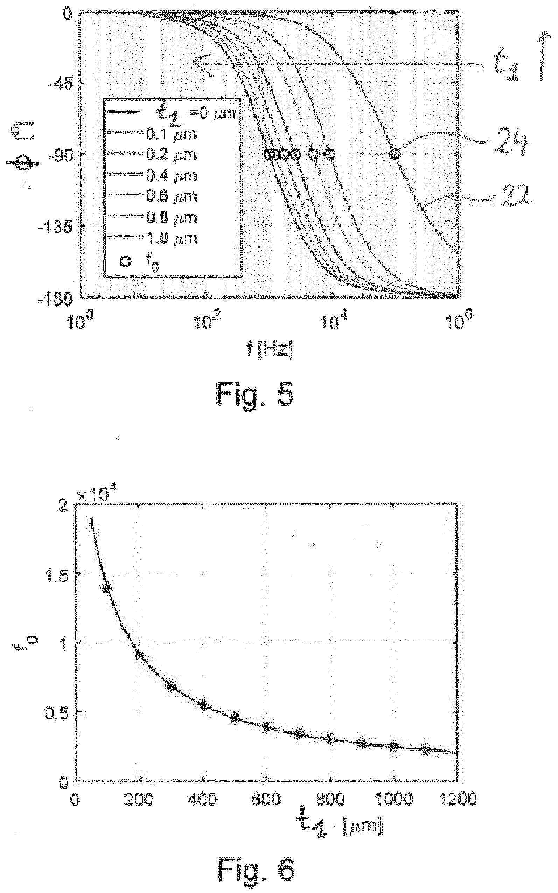

An embodiment of the measurement method will now be illustrated with respect to the graphs of Figs. 5 to 8. These data have been obtained by a numerical data analysis, but are expected to have a good correspondence with real measurement data.

In step 1, the complex inductance spectrum L₀ is measured at multiple frequencies, e.g. 8 frequencies between 1 kHz and 15 kHz, when no workpiece is present.
For a series of measurements, step 1 only needs to be carried out once, and the results stored in the computer.

In step 2, the inductance spectrum L is measured at the same frequency points as in step 1, when the sensor head 1 is placed above a workpiece 2. In step 3, the change in the inductance spectrum Δ*L* caused be the workpiece may be calculated as Δ*L = L*₁ *- L*₀. In step 4, an interpolation of the inductance phase spectrum may be performed to get the characteristic frequency point at which the phase angle is -90°.

This step is illustrated in Fig. 5, which shows a graph of inductance phase angles φ for a spectrum of frequencies between 1 Hz and 10⁶ Hz. The inductance spectrum has been taken for samples having different thicknesses of the first coating layer, t₁. Thus, several curves 22 simulated for thicknesses between 0.1 µm and 1.0 µm are shown in Fig. 5, wherein the smallest t₁ of 0 is represented by the graph on the right, the arrow indication the direction of increasing t₁. The circles 24 indicate the respective characteristic frequencies of each sample, namely the frequency at which the phase angle of the inductance is -90°. The numerical simulations were performed assuming a first coating layer made of a cermet coating, in particular tungsten carbide, and a second coating layer made of a Ni-based alloy, in particular nickel cobalt, and for a thickness of the second coating layer of 0.2 mm, disposed on a copper substrate having a thickness of 70 mm.

In step 5, the thickness t₁ may be determined by using the respective characteristic frequency as an input to the first parametric function. This function is illustrated in Fig. 6, wherein the stars indicate the numerical data and the line in between has been fitted using the formula 1a above. It can be seen that the characteristic frequency f₀ is a very good indicator of upper layer thickness at least up to a thickness of 1.2 mm.

In the next step 6, the effect of the first layer on the inductance at the pre-determined low frequency is compensated using the first coating layer thickness determined from step 5, as an input to another parametric function, for example the equation 3 above.

In step 7, the lower layer thickness may be determined from the compensated inductance at the pre-determined, low frequency using another parametric function, for example equation 4 above.

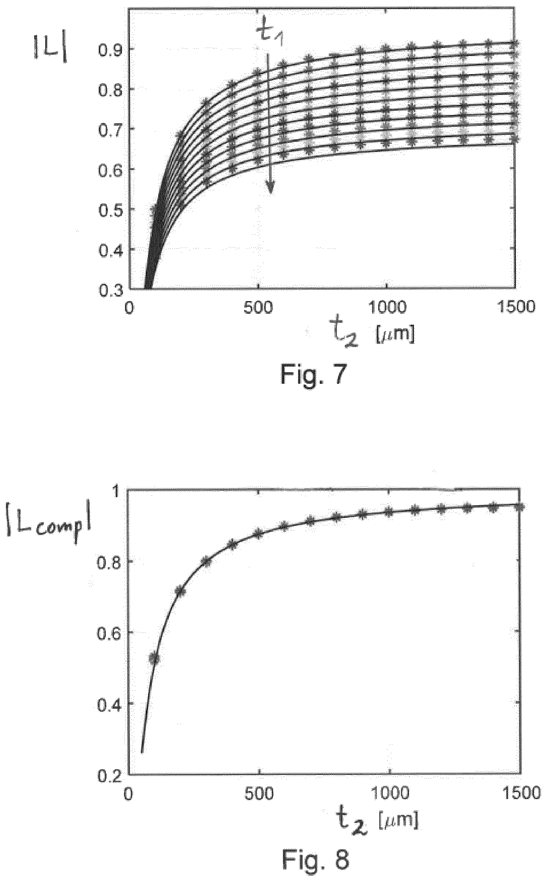

The dependence of the magnitude of the inductance on both first and second coating layer thicknesses is illustrated in Fig. 7. In particular, Fig. 7 shows that the simulated data indicated by the stars may for example be fitted to the formula: $\left|L\right| = \left({p}_{3}+{p}_{4}⋅{t}_{1}\right) exp \left\{\frac{{p}_{5}}{{t}_{2}}\right\} .$

Thus, it depends on both first and second coating layer thicknesses. The curves of increasing t₁ are indicated by the arrow. Once the magnitude of the inductance |*L*| has been compensated for the effect of the first coating layer, the magnitude of the compensated inductance |*L_{comp}*|may be described by a simple exponential function which is illustrated in Fig. 8.

The steps 4 to 7 are preferably carried out in sequence, since the first coating layer thickness may be determined first and used to compensate its effect on the low frequency inductance, before the second coating layer thickness may be deduced. The inductance data measured in step 1 and 2 may be stored and may be used in step 3 to calculate the inductance change caused by the workpiece.

## Claims

1. A method for non-destructively measuring the thickness (t1,t2) of at least one coating layer (16, 18) formed on a substrate (20) of a workpiece (2), wherein the workpiece (2) comprises optionally a first coating layer (16) made of a material which is electrically conductive and either diamagnetic or paramagnetic, and which is disposed on top of a second coating layer (18), which is made of a ferromagnetic, ferrimagnetic or anti-ferromagnetic material, wherein the second coating layer (18) is disposed between the first coating layer (16) and the substrate (20), the method comprising the steps of:
(a) placing an inductance sensor head (1) in close proximity to the workpiece (2);
(b) measuring the inductance (14) at a plurality of frequencies within a frequency range to obtain an inductance spectrum (22), and measuring the inductance at a predetermined frequency which is in the lower third of the frequency range or below the lower limit of the frequency range;
(c) determining a characteristic frequency f₀ (24) from the inductance spectrum, wherein the characteristic frequency f₀ (24) is (c-i) the frequency of the zero-crossing of the real part of the inductance, or (c-ii) the frequency at which the imaginary part of the inductance is at a minimum, or (c-iii) the frequency at which the phase angle of the inductance is -90°;
(d) calculating the thickness t₁ of the first coating layer (16) from the characteristic frequency (24), wherein the thickness may also be zero;
(e) calculating the thickness t₂ of the second coating layer (18) from the inductance at the predetermined frequency and the calculated thickness t₁ of the first coating layer (16).

2. The method of claim 1, wherein the thickness t₁ of the first coating layer (16) is calculated from the characteristic frequency (24) by a first parametric function, the parameters of the first parametric function having been determined in a calibration procedure, wherein the first parametric function is in particular ${t}_{1} = \frac{1}{{p}_{2}} \left(\frac{1}{{f}_{0}}-{p}_{1}\right)$ wherein t₁ is the thickness of the first coating layer (16), p₁ and p₂ are the parameters of the first parametric function, and f₀ is the characteristic frequency (24).

3. The method of claim 1 or 2, wherein the thickness t₂ of the second coating layer (18) is calculated from the magnitude or the real part of the inductance (L) at the pre-determined frequency by a second parametric function, the parameters of the second parametric function having been determined in a calibration procedure, wherein the second parametric function is in particular ${t}_{2} = \frac{{p}_{5}}{ln \left|{L}_{low}\right| - ln \left({p}_{3}+{p}_{4}⋅{t}_{1}\right)}$ wherein t₂ is the thickness of the second coating layer (18), p₃, p₄ and p₅ are the parameters of the second parametric function, and L_{low} is the inductance measured at the pre-determined frequency.

4. The method of one of the preceding claims, wherein the thickness t₂ of the second coating layer (18), is calculated by:
(e1) compensating the effect of the first coating layer (16) on the inductance at the pre-determined frequency (*f*_{low}) using the thickness t₁ of the first coating layer (16) as an input to a third parametric function, the parameters of the third parametric function having been determined in a calibration procedure; and
(e2) determining the thickness t₂ of the second coating layer (18) from the compensated inductance at the predetermined frequency using a fourth parametric function, the parameters of the fourth parametric function having been determined in a calibration procedure.

5. The method of one of the preceding claims, wherein the lower limit of the frequency range is between 10 Hz and 1000 Hz, preferably between 100 Hz and 500 Hz, and the upper limit of the frequency range is between 5 kHz and 800 kHz, preferably between 10 kHz and 400 kHz, more preferred between 20 kHz and 100kHz.

6. The method of one of the preceding claims, wherein the pre-determined frequency is between 10 Hz and 1000 Hz, preferably between 50 Hz and 600 Hz, more preferred between 100 Hz and 300 Hz.

7. The method of one of the preceding claims, including a calibration procedure including the steps of:
(i) placing the inductance sensor head (1) in close proximity to a plurality of calibration samples, the calibration samples having a plurality of different, known thicknesses of the first and second coating layers (16,18);
(ii) for each calibration sample, measuring the inductance at a plurality of frequencies within a frequency range to obtain an inductance spectrum, and measuring the inductance at a pre-determined frequency which is in the lower third of the frequency range or below the lower limit of the frequency range;
(iii) determining the characteristic frequencies from the inductance spectra;
(iv) determining the parameters of a first parametric function from the characteristic frequencies of the plurality of calibration samples, using the know thicknesses of the first coating layer (16);
(v) determining the parameters of a second parametric function from the inductance at the predetermined frequency of the plurality of calibration samples and the known thicknesses of the first and second coating layers (16,18).

8. The method of one of the preceding claims, wherein the first coating layer (16) has a thickness in a range of 0 µm to 3 mm, preferably 50 µm to 1.5 mm, more preferred 0.1 mm to 0.6 mm, and the second coating layer (18) has a thickness in a range of 50 µm to 3 mm, preferably 0.1 mm to 1.5 mm, most preferred 0.3 mm to 1.3 mm.

9. The method of one of the preceding claims, wherein the first coating layer (16) is made of a ceramic or cermet coating and/or the second coating layer (18) is made of a nickel-based alloy.

10. The method of one of the preceding claims, for measuring the thicknesses of the coating layers (16,18) on a continuous casting mould for steel (2), preferably the continuous casting mould being formed by a substrate (20) made of copper of a copper-based alloy.

11. A sensor assembly for non-destructively measuring the thickness of a coating layer (16,18) formed on a substrate (20) of a workpiece (2), the substrate having optionally a first coating layer (16) made of an electrically conductive and either diamagnetic or paramagnetic material, which is disposed on top of a second coating layer (18) made of a ferromagnetic, ferrimagnetic or anti-ferromagnetic material, wherein the second coating layer (18) is disposed between the first coating layer (16) and the substrate, the sensor assembly comprising:
- at least one sensor head (1) comprising at least one coil (4,6,8), wherein the at least one coil is adapted to generate an alternating magnetic field (12) at a plurality of frequencies within a frequency range, and to sense the change in magnetic field caused by the presence of the workpiece (2) close to the sensor head;
- an impedance analyzer (5) adapted to determine the inductance at the plurality of frequencies to obtain an inductance spectrum, and to determine the inductance at a pre-determined frequency which is in the lower third of the frequency range or below the lower limit of the frequency range;
- a data processing unit (7) adapted to determine a characteristic frequency (24) from the inductance spectrum, wherein the characteristic frequency (24) is the frequency of the zero-crossing of the real part of the inductance, or the frequency at which the imaginary part of the inductance is at a minimum, or the frequency at which the phase angle of the inductance is -90°; calculate the thickness of the first coating layer (16) from the characteristic frequency (24), wherein the thickness may also be zero; and calculate the thickness of the second coating layer (18) from the inductance at the pre-determined frequency and the calculated thickness of the first coating layer (16).

12. The sensor assembly of claim 11, wherein the sensor head (1) comprises a driving coil (4) adapted to generate an alternating magnetic field at a plurality of frequencies within a frequency range, and two sensing coils (6,8) adapted to sense the change in the magnetic field caused by the presence of the workpiece (2) close to the sensor head; wherein the driving coil (4) is interposed between the two sensing coils (6,8), and the change in the magnetic field is measured as the differential output of the two sensing coils.

13. The sensor assembly of claim 11 or 12, comprising multiple sensor heads (1) arranged in an array and being adapted for simultaneously measuring the thickness or thicknesses of the coating layer(s) (16,18) at multiple positions on the workpiece (2).

14. The sensor assembly of one of claims 11 to 13, comprising at least one displacement sensor for measuring the surface profile of the workpiece (2) during the process of measuring the thickness or thicknesses of the coating layer(s) (16,18) formed on a substrate (20) of a workpiece (2).

15. The sensor assembly of one of claims 11 to 14, comprising at least one temperature sensor to measure the temperature of the workpiece (2), wherein the data processing unit is adapted to compensate for the temperature effect on the sensor output.

## Patentansprüche

1. Verfahren zur zerstörungsfreien Messung der Dicke (t1,t2) mindestens einer auf einem Substrat (20) eines Werkstücks (2) ausgebildeten Deckschicht (16, 18), wobei das Werkstück (2) optional eine erste Deckschicht (16) umfasst, die aus einem Material besteht, das elektrisch leitfähig und entweder diamagnetisch oder paramagnetisch ist, und die auf einer zweiten Deckschicht (18) angeordnet ist, die aus einem ferromagnetischen, ferrimagnetischen oder antiferromagnetischen Material besteht, wobei die zweite Deckschicht (18) zwischen der ersten Deckschicht (16) und dem Substrat (20) angeordnet ist, wobei das Verfahren die Schritte umfasst:
(a) Platzieren eines Induktivitätssensorkopfs (1) in unmittelbarer Nähe zu dem Werkstück (2);
(b) Messen der Induktivität (14) bei einer Vielzahl von Frequenzen innerhalb eines Frequenzbereichs, um ein Induktivitätsspektrum (22) zu erhalten, und Messen der Induktivität bei einer vorbestimmten Frequenz, die im unteren Drittel des Frequenzbereichs oder unterhalb der unteren Grenze des Frequenzbereichs liegt;
(c) Bestimmen einer Eigenfrequenz f₀ (24) aus dem Induktivitätsspektrum, wobei die Eigenfrequenz f₀ (24) (c-i) die Frequenz des Nulldurchgangs des Realteils der Induktivität ist oder (c-ii) die Frequenz ist, bei der der Imaginärteil der Induktivität minimal ist, oder (c-iii) die Frequenz ist, bei der der Phasenwinkel der Induktivität -90° beträgt;
(d) Berechnen der Dicke t₁ der ersten Deckschicht (16) aus der Eigenfrequenz (24), wobei die Dicke auch Null sein kann;
(e) Berechnen der Dicke t₂ der zweiten Deckschicht (18) aus der Induktivität bei der vorbestimmten Frequenz und der berechneten Dicke t₁ der ersten Deckschicht (16).

2. Verfahren nach Anspruch 1, wobei die Dicke t₁ der ersten Deckschicht (16) aus der Eigenfrequenz (24) durch eine erste Parameterfunktion berechnet wird, wobei die Parameter der ersten Parameterfunktion in einem Kalibrierungsverfahren bestimmt worden sind, wobei die erste Parameterfunktion insbesondere wie folgt ist ${t}_{1} = \frac{1}{{p}_{2}} \left(\frac{1}{{f}_{0}}-{p}_{1}\right)$ wobei t₁ die Dicke der ersten Deckschicht (16) ist, p₁ und p₂ die Parameter der ersten Parameterfunktion sind und f₀ die Eigenfrequenz (24) ist.

3. Verfahren nach Anspruch 1 oder 2, wobei die Dicke t₂ der zweiten Deckschicht (18) aus der Größe oder dem Realteil der Induktivität (L) bei der vorbestimmten Frequenz durch eine zweite Parameterfunktion berechnet wird, wobei die Parameter der zweiten Parameterfunktion in einem Kalibrierungsverfahren bestimmt worden sind, wobei die zweite Parameterfunktion insbesondere wie folgt ist ${t}_{2} = \frac{{p}_{5}}{ln \left|{L}_{low}\right| - ln \left({p}_{3}+{p}_{4}⋅{t}_{1}\right)}$ wobei t₂ die Dicke der zweiten Deckschicht (18) ist, p₃, p₄ und p₅ die Parameter der zweiten Parameterfunktion sind und L_{low} die bei der vorbestimmten Frequenz gemessene Induktivität ist.

4. Verfahren nach einem der vorhergehenden Ansprüche, wobei die Dicke t₂ der zweiten Deckschicht (18) berechnet wird durch:
(e1) Kompensieren der Wirkung der ersten Deckschicht (16) auf die Induktivität bei der vorbestimmten Frequenz (*f*_{low}) unter Verwendung der Dicke t₁ der ersten Deckschicht (16) als Eingabe für eine dritte Parameterfunktion, wobei die Parameter der dritten Parameterfunktion in einem Kalibrierungsverfahren bestimmt worden sind; und
(e2) Bestimmen der Dicke t₂ der zweiten Deckschicht (18) aus der kompensierten Induktivität bei der vorbestimmten Frequenz unter Verwendung einer vierten Parameterfunktion, wobei die Parameter der vierten Parameterfunktion in einem Kalibrierungsverfahren bestimmt worden sind.

5. Verfahren nach einem der vorhergehenden Ansprüche, wobei die untere Grenze des Frequenzbereichs zwischen 10 Hz und 1000 Hz, vorzugsweise zwischen 100 Hz und 500 Hz, liegt und die obere Grenze des Frequenzbereichs zwischen 5 kHz und 800 kHz, vorzugsweise zwischen 10 kHz und 400 kHz, bevorzugter zwischen 20 kHz und 100 kHz, liegt.

6. Verfahren nach einem der vorhergehenden Ansprüche, wobei die vorbestimmte Frequenz zwischen 10 Hz und 1000 Hz, vorzugsweise zwischen 50 Hz und 600 Hz, bevorzugter zwischen 100 Hz und 300 Hz liegt.

7. Verfahren nach einem der vorhergehenden Ansprüche, beinhaltend ein Kalibrierungsverfahren, das die folgenden Schritte beinhaltet:
(i) Platzieren des Induktivitätssensorkopfs (1) in unmittelbarer Nähe zu einer Vielzahl von Kalibrierungsproben, wobei die Kalibrierungsproben eine Vielzahl von verschiedenen, bekannten Dicken der ersten und der zweiten Deckschicht (16, 18) aufweisen;
(ii) für jede Kalibrierungsprobe Messen der Induktivität bei einer Vielzahl von Frequenzen innerhalb eines Frequenzbereichs, um ein Induktivitätsspektrum zu erhalten, und Messen der Induktivität bei einer vorbestimmten Frequenz, die im unteren Drittel des Frequenzbereichs oder unterhalb der unteren Grenze des Frequenzbereichs liegt;
(iii) Bestimmen der Eigenfrequenzen aus den Induktivitäts-Spektren;
(iv) Bestimmen der Parameter einer ersten Parameterfunktion aus den Eigenfrequenzen der Vielzahl von Kalibrierungsproben unter Verwendung der bekannten Dicken der ersten Deckschicht (16);
(v) Bestimmen der Parameter einer zweiten Parameterfunktion aus der Induktivität bei der vorbestimmten Frequenz der Vielzahl von Kalibrierungsproben und den bekannten Dicken der ersten und der zweiten Deckschicht (16, 18).

8. Verfahren nach einem der vorhergehenden Ansprüche, wobei die erste Deckschicht (16) eine Dicke in einem Bereich von 0 µm bis 3 mm, vorzugsweise 50 µm bis 1,5 mm, bevorzugter 0,1 mm bis 0,6 mm aufweist und die zweite Deckschicht (18) eine Dicke in einem Bereich von 50 µm bis 3 mm, vorzugsweise 0,1 mm bis 1,5 mm, am bevorzugtesten 0,3 mm bis 1,3 mm aufweist.

9. Verfahren nach einem der vorhergehenden Ansprüche, wobei die erste Deckschicht (16) aus einer Keramik- oder Cermetbeschichtung besteht ist und/oder die zweite Deckschicht (18) aus einer Legierung auf Nickelbasis besteht.

10. Verfahren nach einem der vorhergehenden Ansprüche zur Messung der Dicken der Deckschichten (16, 18) auf einer Stranggießkokille für Stahl (2), wobei vorzugsweise die Stranggießkokille durch ein Substrat (20) gebildet wird, das aus Kupfer aus einer Legierung auf Kupferbasis besteht.

11. Sensoranordnung zur zerstörungsfreien Messung der Dicke einer auf einem Substrat (20) eines Werkstücks (2) ausgebildeten Deckschicht (16, 18), wobei das Substrat optional eine erste Deckschicht (16) aufweist, die aus einem elektrisch leitfähigen und entweder diamagnetischen oder paramagnetischen Material besteht, die auf einer zweiten Deckschicht (18) angeordnet ist, die aus einem ferromagnetischen, ferrimagnetischen oder antiferromagnetischen Material besteht, wobei die zweite Deckschicht (18) zwischen der ersten Deckschicht (16) und dem Substrat angeordnet ist, wobei die Sensoranordnung Folgendes umfasst:
- mindestens einen Sensorkopf (1), der mindestens eine Spule (4, 6, 8) umfasst, wobei die mindestens eine Spule geeignet ist, ein magnetisches Wechselfeld (12) bei einer Vielzahl von Frequenzen innerhalb eines Frequenzbereichs zu erzeugen und die Änderung des Magnetfelds zu erfassen, die durch die Anwesenheit des Werkstücks (2) in der Nähe des Sensorkopfs verursacht wird;
- einen Impedanzanalysator (5), der geeignet ist, die Induktivität bei der Vielzahl von Frequenzen zu bestimmen, um ein Induktivitätsspektrum zu erhalten, und um die Induktivität bei einer vorbestimmten Frequenz zu bestimmen, die im unteren Drittel des Frequenzbereichs oder unterhalb der unteren Grenze des Frequenzbereichs liegt;
- eine Datenverarbeitungseinheit (7), die geeignet ist, eine Eigenfrequenz (24) aus dem Induktivitätsspektrum zu bestimmen, wobei die Eigenfrequenz (24) die Frequenz des Nulldurchgangs des Realteils der Induktivität ist oder die Frequenz ist, bei der der Imaginärteil der Induktivität minimal ist, oder die Frequenz ist, bei der der Phasenwinkel der Induktivität -90° beträgt; die Dicke der ersten Deckschicht (16) aus der Eigenfrequenz (24) zu berechnen, wobei die Dicke auch Null sein kann; und die Dicke der zweiten Deckschicht (18) aus der Induktivität bei der vorbestimmten Frequenz und der berechneten Dicke der ersten Deckschicht (16) zu berechnen.

12. Sensoranordnung nach Anspruch 11, wobei der Sensorkopf (1) eine Antriebsspule (4), die geeignet ist, ein magnetisches Wechselfeld bei einer Vielzahl von Frequenzen innerhalb eines Frequenzbereichs zu erzeugen, und zwei Erfassungsspulen (6, 8), die geeignet sind, die Änderung des Magnetfelds zu erfassen, die durch die Anwesenheit des Werkstücks (2) in der Nähe des Sensorkopfs verursacht wird, umfasst; wobei die Antriebsspule (4) zwischen den beiden Erfassungsspulen (6, 8) angeordnet ist und die Änderung des Magnetfelds als die differentielle Ausgabe der beiden Erfassungsspulen gemessen wird.

13. Sensoranordnung nach Anspruch 11 oder 12, umfassend mehrere Sensorköpfe (1), die in einem Array angeordnet sind und zum gleichzeitigen Messen der Dicke oder Dicken der Deckschicht(en) (16, 18) an mehreren Positionen auf dem Werkstück (2) geeignet sind.

14. Sensoranordnung nach einem der Ansprüche 11 bis 13, umfassend mindestens einen Wegsensor zum Messen des Oberflächenprofils des Werkstücks (2) während des Prozesses des Messens der Dicke oder der Dicken der auf einem Substrat (20) eines Werkstücks (2) ausgebildeten Deckschicht(en) (16, 18).

15. Sensoranordnung nach einem der Ansprüche 11 bis 14, umfassend mindestens einen Temperatursensor zum Messen der Temperatur des Werkstücks (2), wobei die Datenverarbeitungseinheit geeignet ist, die Temperatureinwirkung auf den Sensorausgang zu kompensieren.

## Revendications

1. Procédé pour mesurer de manière non destructive l'épaisseur (t1,t2) d'au moins une couche de revêtement (16, 18) formée sur un substrat (20) d'une pièce (2), ladite pièce (2) comprenant éventuellement une première couche de revêtement (16) constituée d'un matériau qui est électriquement conducteur et soit diamagnétique soit paramagnétique, et qui est disposée au-dessus d'une seconde couche de revêtement (18), qui est constituée d'un matériau ferromagnétique, ferrimagnétique ou antiferromagnétique, ladite seconde couche de revêtement (18) étant disposée entre la première couche de revêtement (16) et le substrat (20), ledit procédé comprenant les étapes de :
(a) placement d'une tête de capteur d'inductance (1) à proximité immédiate de la pièce (2) ;
(b) mesure de l'inductance (14) à une pluralité de fréquences dans une plage de fréquences pour obtenir un spectre d'inductance (22), et mesure de l'inductance à une fréquence prédéfinie qui se trouve dans le tiers inférieur de la plage de fréquences ou en dessous de la limite inférieure de la plage de fréquences ;
(c) détermination d'une fréquence caractéristique f₀ (24) à partir du spectre d'inductance, ladite fréquence caractéristique f₀ (24) étant (c-i) la fréquence du passage par zéro de la partie réelle de l'inductance, ou (c-ii) la fréquence à laquelle la partie imaginaire de l'inductance est au minimum, ou (c-iii) la fréquence à laquelle l'angle de phase de l'inductance est égal à -90° ;
(d) calcul de l'épaisseur t₁ de la première couche de revêtement (16) à partir de la fréquence caractéristique (24), ladite épaisseur pouvant également être nulle ;
(e) calcul de l'épaisseur t₂ de la seconde couche de revêtement (18) à partir de l'inductance à la fréquence prédéfinie et de l'épaisseur t₁ calculée de la première couche de revêtement (16).

2. Procédé selon la revendication 1, ladite épaisseur t₁ de la première couche de revêtement (16) étant calculée à partir de la fréquence caractéristique (24) par une première fonction paramétrique, lesdits paramètres de la première fonction paramétrique ayant été déterminés dans une procédure d'étalonnage, ladite première fonction paramétrique étant en particulier ${t}_{1} = \frac{1}{{p}_{2}} \left(\frac{1}{{f}_{0}}-{p}_{1}\right)$ où t₁ représente l'épaisseur de la première couche de revêtement (16), p₁ et p₂ représentent les paramètres de la première fonction paramétrique, et f₀ représente la fréquence caractéristique (24).

3. Procédé selon la revendication 1 ou 2, ladite épaisseur t₂ de la seconde couche de revêtement (18) étant calculée à partir de la grandeur ou de la partie réelle de l'inductance (L) à la fréquence prédéfinie par une deuxième fonction paramétrique, lesdits paramètres de la deuxième fonction paramétrique ayant été déterminés dans une procédure d'étalonnage, ladite deuxième fonction paramétrique étant en particulier ${t}_{2} = \frac{{p}_{5}}{ln \left|{L}_{low}\right| - ln \left({p}_{3}+{p}_{4}⋅{t}_{1}\right)}$ où t₂ représente l'épaisseur de la seconde couche de revêtement (18), p₃, p₄ et p₅ représentent les paramètres de la deuxième fonction paramétrique, et L_{low} représente l'inductance mesurée à la fréquence prédéfinie.

4. Procédé selon l'une des revendications précédentes, ladite épaisseur t₂ de la seconde couche de revêtement (18) étant calculée par :
(e1) la compensation de l'effet de la première couche de revêtement (16) sur l'inductance à la fréquence prédéfinie (*f*_{low}) en utilisant l'épaisseur t₁ de la première couche de revêtement (16) comme entrée d'une troisième fonction paramétrique, les paramètres de la troisième fonction paramétrique ayant été déterminés dans une procédure d'étalonnage ; et
(e2) la détermination de l'épaisseur t₂ de la seconde couche de revêtement (18) à partir de l'inductance compensée à la fréquence prédéfinie à l'aide d'une quatrième fonction paramétrique, les paramètres de la quatrième fonction paramétrique ayant été déterminés dans une procédure d'étalonnage.

5. Procédé selon l'une des revendications précédentes, ladite limite inférieure de la plage de fréquences étant comprise entre 10 Hz et 1000 Hz, de préférence entre 100 Hz et 500 Hz, et ladite limite supérieure de la plage de fréquences étant comprise entre 5 kHz et 800 kHz, de préférence entre 10 kHz et 400 kHz, mieux encore entre 20 kHz et 100 kHz.

6. Procédé selon l'une des revendications précédentes, ladite fréquence prédéfinie étant comprise entre 10 Hz et 1000 Hz, de préférence entre 50 Hz et 600 Hz, mieux encore entre 100 Hz et 300 Hz.

7. Procédé selon l'une des revendications précédentes, comprenant une procédure d'étalonnage comprenant les étapes de :
(i) placement de la tête de capteur d'inductance (1) à proximité immédiate d'une pluralité d'échantillons d'étalonnage, les échantillons d'étalonnage présentant une pluralité d'épaisseurs différentes et connues des première et seconde couches de revêtement (16, 18) ;
(ii) pour chaque échantillon d'étalonnage, mesure de l'inductance à une pluralité de fréquences dans une plage de fréquences pour obtenir un spectre d'inductance, et mesure de l'inductance à une fréquence prédéfinie qui se trouve dans le tiers inférieur de la plage de fréquences ou en dessous de la limite inférieure de la plage de fréquences ;
(iii) détermination des fréquences caractéristiques à partir des spectres d'inductance ;
(iv) détermination des paramètres d'une première fonction paramétrique à partir des fréquences caractéristiques de la pluralité d'échantillons d'étalonnage, en utilisant les épaisseurs connues de la première couche de revêtement (16) ;
(v) détermination des paramètres d'une seconde fonction paramétrique à partir de l'inductance à la fréquence prédéfinie de la pluralité d'échantillons d'étalonnage et des épaisseurs connues des première et seconde couches de revêtement (16, 18).

8. Procédé selon l'une des revendications précédentes, ladite première couche de revêtement (16) présentant une épaisseur dans une plage de 0 µm à 3 mm, de préférence de 50 µm à 1,5 mm, mieux encore de 0,1 mm à 0,6 mm, et ladite seconde couche de revêtement (18) présentant une épaisseur dans une plage de 50 µm à 3 mm, de préférence de 0,1 mm à 1,5 mm, mieux encore de 0,3 mm à 1,3 mm.

9. Procédé selon l'une des revendications précédentes, ladite première couche de revêtement (16) étant constituée d'un revêtement céramique ou cermet et/ou ladite seconde couche de revêtement (18) étant constituée d'un alliage à base de nickel.

10. Procédé selon l'une des revendications précédentes, pour mesurer les épaisseurs des couches de revêtement (16, 18) sur un moule de coulée continue pour l'acier (2), de préférence le moule de coulée continue étant formé d'un substrat (20) constitué de cuivre d'un alliage à base de cuivre.

11. Ensemble capteur pour mesurer de manière non destructive l'épaisseur d'une couche de revêtement (16, 18) formée sur un substrat (20) d'une pièce (2), le substrat comportant éventuellement une première couche de revêtement (16) constituée d'un matériau électriquement conducteur et soit diamagnétique soit paramagnétique, qui est disposée au-dessus d'une seconde couche de revêtement (18) constituée d'un matériau ferromagnétique, ferrimagnétique ou antiferromagnétique, ladite seconde couche de revêtement (18) étant disposée entre la première couche de revêtement (16) et le substrat, l'ensemble capteur comprenant :
- au moins une tête de capteur (1) comprenant au moins une bobine (4, 6, 8), ladite au moins une bobine étant adaptée à la génération d'un champ magnétique alternatif (12) à une pluralité de fréquences dans une plage de fréquences, et à la détection du changement de champ magnétique causé par la présence de la pièce (2) à proximité de la tête de capteur ;
- un analyseur d'impédance (5) adapté à la détermination de l'inductance à la pluralité de fréquences pour obtenir un spectre d'inductance, et à la détermination de l'inductance à une fréquence prédéfinie qui se trouve dans le tiers inférieur de la plage de fréquences ou en dessous de la limite inférieure de la plage de fréquences ;
- une unité de traitement de données (7) adaptée à la détermination d'une fréquence caractéristique (24) à partir du spectre d'inductance, ladite fréquence caractéristique (24) étant la fréquence du passage par zéro de la partie réelle de l'inductance, ou la fréquence à laquelle la partie imaginaire de l'inductance est au minimum, ou la fréquence à laquelle l'angle de phase de l'inductance est égal à -90° ; au calcul de l'épaisseur de la première couche de revêtement (16) à partir de la fréquence caractéristique (24), ladite épaisseur pouvant également être nulle ; et au calcul de l'épaisseur de la seconde couche de revêtement (18) à partir de l'inductance à la fréquence prédéfinie et de l'épaisseur calculée de la première couche de revêtement (16).

12. Ensemble capteur selon la revendication 11, ladite tête de capteur (1) comprenant une bobine d'entraînement (4) adaptée à la génération d'un champ magnétique alternatif à une pluralité de fréquences dans une plage de fréquences, et deux bobines de détection (6, 8) adaptées à la détection du changement du champ magnétique causé par la présence de la pièce (2) à proximité de la tête de capteur ; ladite bobine d'entraînement (4) étant intercalée entre les deux bobines de détection (6, 8), et ledit changement du champ magnétique étant mesuré en tant que sortie différentielle des deux bobines de détection.

13. Ensemble capteur selon la revendication 11 ou 12, comprenant de multiples têtes de capteur (1) agencées en un réseau et étant adaptées à la mesure simultanée de l'épaisseur ou des épaisseurs de la ou des couches de revêtement (16, 18) en de multiples positions sur la pièce (2).

14. Ensemble capteur selon l'une des revendications 11 à 13, comprenant au moins un capteur de déplacement pour mesurer le profil de surface de la pièce (2) pendant le processus de mesure de l'épaisseur ou des épaisseurs de la ou des couches de revêtement (16, 18) formées sur un substrat (20) d'une pièce (2).

15. Ensemble capteur selon l'une des revendications 11 à 14, comprenant au moins un capteur de température pour mesurer la température de la pièce (2), ladite unité de traitement de données étant adaptée à la compensation de l'effet de la température sur la sortie de capteur.
